# EUROPÄISCHE PATENTSCHRIFT

(11) **EP 1 290 774 B1**
(45) Veröffentlichungstag und Bekanntmachung des Hinweises auf die Patenterteilung: **04.05.2005**
(21) Anmeldenummer: 01943001.6
(22) Anmeldetag: 04.05.2001
(51) Int. Cl.: H02K 21/14

(54) **UNIPOLAR-TRANSVERSALFLUSSMASCHINE**
UNIPOLAR TRANSVERSE FLUX MACHINE
MACHINE A FLUX TRANSVERSAL UNIPOLAIRE

(30) Priorität: 05.05.2000 DE 10021914; 12.08.2000 DE 10039466
(43) Veröffentlichungstag der Anmeldung: 12.03.2003
(73) Patentinhaber: ROBERT BOSCH GMBH, 70442 Stuttgart (DE)
(72) Erfinder: KASTINGER, Guenter, 76571 Gaggenau-Sulzbach (DE); PAWELETZ, Anton, 70736 Fellbach (DE)
(86) Internationale Anmeldenummer: PCT/DE2001/001665
(87) Internationale Veröffentlichungsnummer: WO 2001/086785

(56) Entgegenhaltungen:
- EP-A- 0 942 517
- WO-A-97/42699
- DE-A- 3 602 687
- DE-A- 19 614 862
- US-A- 5 747 898
- MICHAEL BORK: "Entwicklung und Optimierung einer fertigungsgerechten Transversalflussmaschine, Diss 82, RWTH Aachen" 1997 , SHAKER VERLAG , AACHEN XP002177923 in der Anmeldung erwähnt Seite 8, Absatz 3 -Seite 14, Absatz 1; Abbildungen 2.5,2.6

## Beschreibung

### Stand der Technik

Die Erfindung geht aus von einer Unipolar-Transversalflußmaschine nach dem Oberbegriff des Anspruchs 1.

Bei einer bekannten Maschine dieser Art (EP 0 544 200 A1), dort als Hybrid-Synchronmaschine mit Transversalmagnetfluß (Hybrid Synchronous Machine with Transverse Magnetic Flux) bezeichnet, weist die Zahnung eines jeden Rotorrings eine auf dem von der Rotorachse abgekehrten Außenumfang des Rotorrings sich erstreckende und eine auf dem der Rotorachse zugekehrten Innenumfang des Rotorrings sich erstreckende Zahnreihe mit gleicher Zahnteilung auf. Die Zahnreihen auf jedem Rotorring sind dabei um eine Zahnteilung gegeneinander verschoben. Die Jochteilung am Stator entspricht der Zahnteilung einer inneren oder äußeren Zahnreihe, so daß immer ein äußerer Zahn des einen Rotorrings und ein innerer Zahn des anderen Rotorrings gleichzeitig unter einem Statorjoch liegen. Die beiden aus jeweils zwei Rotorringen mit dazwischenliegendem, axial unipolar magnetisiertem Ringmagneten bestehenden Rotormodule sind an den in Achsrichtung des Rotors voneinander abgekehrten Seiten eines Rotorkörpers festgespannt, der am Gehäuse über Drehlager abgestützt ist. Die vom Gehäuse aufgenommenen Statorjoche eines jeden Statormoduls sind U-förmig ausgebildet und übergreifen mit ihren parallel zur Rotorachse ausgerichteten Jochschenkeln die inneren und äußeren Zahnreihen der beiden Rotorringe der Rotormodule. Die konzentrisch zur Rotorachse angeordnete kreisförmige Ringspule in jedem Statormodul durchläuft die Statorjoche im Jochgrund, liegt also im Bereich zwischen der vom Rotorkörper wegweisenden Ringfläche des äußeren Rotorrings und dem Quersteg der Statorjoche.

Transversalflußmaschinen mit Permantentmagenterregung sind aus der Literatur bekannt, so "Michael Bork, Entwicklung und Optimierung einer fertigungsgerechten Transversalflußmaschine, Diss. 82, RWTH Aachen, Shaker Verlag Aachen, 1997, Seite 8 ff.". Die kreisförmig gewickelte Statorwicklung wird von U-förmigen Jochen aus Weicheisen umschlossen, die in Drehrichtung im Abstand doppelter Polteilung angeordnet sind. Die offenen Enden dieser U-joche sind auf den Luftspalt zwischen Stator und Rotor gerichtet und bilden die Pole des Stators. Ihnen gegenüber sind Permanentmagnetplättchen so angeordnet, daß die beiden Plättchen, die den Polen eines Statorjoches gegenüberliegen, entgegengesetzte Polarität besitzen. Um die Permanentmagnete, die bei der Rotordrehung sich zeitweise zwischen den Polen des Stators befinden und keinen ferromagnetischen Rückschluß haben, kurzzuschließen, sind im Stator Rückschlußelemente angeordnet. Diese verhindern, daß der Fluß der Permanentmagnete über die Jochschenkel und die Ringspule einstreut und durch Schwächung des Statorflusses die Wirksamkeit der Statorflußverkettung vermindert. Die Rückschlußelemente führen damit zu einer deutlichen Leistungssteigerung der Maschine.

Eine Unipolar-Transversalflußmaschine gemäß dem Oberbegriff des Anspruchs 1 ist aus WO 97/42699 bekannt.

### Vorteile der Erfindung

Die erfindungsgemäße Unipolar-Transversalflußmaschine hat den Vorteil einer einfachen Konstruktion in Modulbauweise, mit der jede gewünschte Strängigkeit der Maschine durch Hinzunahme oder Wegfall identisch ausgebildeter Stator- und Rotoreinheiten realisiert, d. h. modular aufgebaut, werden kann. Mit zunehmender Zahl der aus jeweils einem Statormodul und einem Rotormodul sich zusammensetzenden Moduleinheiten verbessert sich der Rundlauf der Maschine und ein zunächst schrittschaltähnliches Verhalten der Maschine geht in einem kontinuierlichen Rundlauf ohne Rippel im Momentenverlauf über. Da das Gesamtmoment der Maschine die Summe der Momentenanteile der Moduleinheiten ist, kann das Gesamtmoment der Maschine in einfacher Weise an bestehende Anforderungen problemlos angepaßt werden.

Gegenüber herkömmlichen Transversalflußmaschinen hat die erfindungsgemäße Unipolar-Transversalflußmaschine den Vorteil einer einfachen, unipolaren Magnetisierung des Rotors und einer einfachen Konstruktion durch Vermeiden der Vielzahl von einzelnen Permanentmagneten. Der in der Statorwicklung erzeugte Fluß geht primär nicht mehr durch die Permanentmagnete sondern durch die Zähne der Rotorringe und schließt sich über die Rückschlußelemente, so daß die Zähne besser ausgenutzt werden. Es entstehen bessere Verhältnisse der Flußführung, und der Gesamtanteil des Streuflusses wird geringer. Außerdem dienen die Rückschlußelemente zur Erzeugung eines Gegenpols im Stator, so daß man im Stator und Rotor dieselbe Polzahl erhält. Die Ringspule, deren nach außen gerichtete Abschnitte zwischen den Statorjochen eine verhältnismäßig große Fläche besitzt, läßt sich gut kühlen, so daß hohe Stromdichten in der Ringspule erreichbar sind.

Durch die in den weiteren Ansprüchen aufgeführten Maßnahmen sind vorteilhafte Weiterbildungen und Verbesserungen der im Patentanspruch 1 angegebenen Unipolar-Transversalflußmaschine möglich.

Gemäß einer vorteilhaften Ausführungsform der Erfindung weisen die Rückschlußelemente C-Form mit zwei jeweils einem Rotorring radial gegenüberliegenden kurzen Schenkeln und einem diese miteinander verbindenden Quersteg auf, der sich auf der der Rotorachse zugekehrten Innenseite der kreisförmig ausgebildeten Ringspule parallel zur Rotorachse erstreckt.

Gemäß einer alternativen Ausführungsform der Erfindung sind die Rückschlußelemente identisch den Statorjochen ausgebildet und weisen U-form mit zwei jeweils einem Rotorring radial gegenüberliegenden langen Schenkeln und einem diese miteinander verbindenden parallel zur Rotorachse sich erstreckenden Quersteg auf. Die Ringspule des Statormoduls ist in der Radialebene punktsymmetrisch zur Rotorachse mäanderförmig derart geformt, daß sie aufeinanderfolgend abwechselnd zwischen den Jochschenkeln eines Statorjoches hindurch und über die von der Rotorachse abgekehrte Außenseite eines Rückschlußelements hinweg verläuft. Dies hat den Vorteil, daß für Joche und Rückschlußelemente das gleiche Werkzeug verwendet werden kann und dadurch mit dem gleichen Werkzeug höhere Stückzahlen gefertigt werden können. Die Ringspule läßt sich relativ einfach in die Mäanderform bringen.

Gemäß einer vorteilhaften Ausführungsform der Erfindung ist jedes Statormodul in einem aus zwei Halbschalen bestehenden Gehäuse aufgenommen, die identisch ausgebildet und spiegelsymetrisch aufeinandergesetzt sind und miteinander axial fluchtende Radialnuten zum Einstecken der Statorjoche und Rückschlußelemente sowie spiegelsymetrisch einander gegenüberliegende, konzentrisch zur Gehäuseachse ausgerichtete Vertiefungen zur Aufnahme der Ringspule aufweisen. Dadurch wird eine selbsttragende Statorkonstruktion mit identischen Bauteilen und einfacher Fügetechnik erreicht, die für eine hochautomatisierte Großserienproduktion bestens geeignet ist. Die selbsttragende und selbsthaltende Funktion mit exakter Positionierung der Statormodulelemente (Statorjoche, Rückschlußelemente, Ringspule) ist nicht nur auf das einzelne Statormodul beschränkt, sondern wird auch für die Positionierung weiterer Statormodule zueinander und für die Kraft- bzw. Momentübertragung verwendet.

Gemäß einer bevorzugten Ausführungsform der Erfindung besitzt jede Halbschale eine gitterartige Struktur mit einem Innenring und einem dazu konzentrischen Außenring. Beide Ringe sind durch Radialstege einstückig miteinander verbunden. Die die Rückschlußelemente aufnehmenden Radialnuten sind im Innenring eingebracht, während sich die die Statorjoche aufnehmenden Radialnuten über Innenring, Radialsteg und Außenring erstrecken. Diese Gitterstruktur mit zwischen den Radialstegen liegenden Öffnungen ermöglicht eine intensive Wärmeübergabe von den aktiven magnetischen und elektrischen Statorelementen auf das Kühlmedium Luft und damit eine intensive Wärmeabgabe zu der Umgebung.

Gemäß einer vorteilhaften Ausführungsform der Erfindung sind die Statorjoche und die sie aufnehmenden Radialnuten in Form und Abmessungen so aufeinander abgestimmt, daß bei in die Radialnuten eingesetzten Statorjochen die beiden Halbschalen aneinander radial und axial unverschieblich fixiert sind. Damit haben die Statorjoche zwei Funktionen, nämlich zum einen die der magnetische Flußführung und zum andern die einer mechanischen Klammer, welche die Halbschale zusammenhalten und richtig positionieren.

Zur Realisierung der mechanischen Klammerfunktion weisen die Statorjoche nach einer vorteilhaften Ausführungsform der Erfindung an beiden Seiten ihres Querstegs jeweils einen vorspringenden Haken auf, der bei in die Radialnuten eingesetzten Statorjochen einen Radialsteg der beiden Halbschalen auf dessen von der Radialnut abgekehrten Rückseite formschlüssig übergreift.

Bei einer mehrsträngigen Ausführung der Unipolar-Transversalflußmaschine, bei welcher die Rotormodule axial fluchtend auf der Rotorwelle angeordnet und die Statormodule gegeneinander um einen festen Winkel verdreht sind, der bei zweisträngiger Ausführung 90° elektrisch und bei m strängiger Ausführung 360°/m elektrisch mit m>2 beträgt, sind in den in den Radialstegen sich erstreckenden Ringabschnitten des Außenrings der Halbschalen von der von den Radialnuten abgekehrten Außenseiten der Halbschale aus zwei voneinander beabstandete Radialaussparungen eingebracht, deren Breite in Umfangsrichtung der Breite der vorspringenden Haken und deren radiale Tiefe der axialen Tiefe der Wurzel der vorspringenden Haken entspricht. Zum spiegelsymetrischen Aufeinandersetzten der beiden identischen Halbschalen ist die eine Radialausnehmung im Ringabschnitt um den festen Winkel zu der nachfolgenden Radialnut für ein Statorjoch und die andere Radialausnehmung um den gleichen festen Winkel zu der vorausgehenden Radialnut für ein Statorjoch versetzt angeordnet. In eine dieser Radialausnehmungen pro Ringabschnitt dringen die vorspringenden Haken des benachbarten Statormoduls ein und gewährleisten den erforderlichen Drehwinkelversatz zwischen benachbarten Statormodulen.

In einer alternativen Ausführungsform der mehrsträngigen Ausführung fluchten die Statormodule axial, während die Rotormodule um einen gleichen wie vorstehend definierten festen Winkel gegeneinander verdreht auf der Rotorwelle angeordnet sind. Bei einer solchen Ausbildung der mehrsträngigen Maschine entfallen die vorstehend beschriebenen Radialausnehmungen im Außenring und die Statorjoche der in Achsrichtung nebeneinanderliegenden Statormodule sind in ihrem Querstegbereich durch axial sich erstreckende Brücken miteinander verbunden. Die beiden außenliegenden Statorjoche der miteinander verbundenen Statorjoche weisen auf ihrer äußeren Seite jeweils einen vom Quersteg vorspringenden Haken auf, der bei in die Radialnuten eingesteckten Statorjochen einen Radialsteg der beiden Halbschalen auf dessen von der Radialnut abgekehrten Rückseite übergreift. Die miteinander verbundenen Statorjoche mit den dazwischenliegenden Brücken sind vorzugsweise als einstückige Stanzteile ausgeführt.

### Zeichnung

Die Erfindung ist anhand von in der Zeichnung dargestellten Ausführungsbeispielen in der nachfolgenden Beschreibung näher erläutert. Es zeigen:
- Fig. 1: ausschnittweise eine perspektivische Ansicht einer zweisträngigen, 32-poligen Unipolar-Transversalflußmaschine, teilweise schematisiert,
- Fig. 2: eine Draufsicht einer Moduleinheit einer 8-poligen Unipolar-Transversalflußmaschine, schematisch dargestellt,
- Fig. 3: einen Schnitt längs der Linie III - III in Fig. 2,
- Fig. 4 und Fig. 5: jeweils eine schematisch dargestellte Draufsicht einer zweisträngigen, 8-poligen Unipolar-Transversalflußmaschine in zwei unterschiedlichen Drehstellungen des Rotors, zur Erläuterung der Funktionsweise,
- Fig. 6: ein Diagramm der Bestromung des Stators der beiden Moduleinheiten der zweistrangigen Unipolar-Transversalflußmaschine,
- Fig. 7: jeweils ein Diagramm des Momentenverlaufs in den beiden Rotormodulen und des Verlaufs des Gesamtmoments an der Rotorwelle,
- Fig. 8: ausschnittweise eine perspektivische Darstellung einer Abwicklung einer Moduleinheit mit einer modifizierten Statorwicklung,
- Fig. 9: eine perspektivische Explosionsdarstellung eines ein Statormodul aufnehmenden Gehäuses für eine einsträngige, 32-polige Unipolar-Transversalflußmaschine,
- Fig. 10: eine Draufsicht eines Statorjochs zur Verwendung in dem Gehäuse in Fig. 9,
- Fig. 11: eine Draufsicht zweier miteinander verbundener, axial fluchtender Statorjoche für eine zweisträngige Unipolar-Transversalflußmaschine,
- Fig. 12: ausschnittweise eine Draufsicht eines am Gehäuse zu befestigenden Lagerschilds zur Drehlagerung der Rotorwelle,
- Fig. 13: ausschnittweise eine vereinfachte Darstellung einer Moduleinheit einer als Hohlwellenversion ausgeführten 16-poligen Unipolar-Transversalflußmaschine.

### Beschreibung der Ausführungsbeispiele

Die in der Zeichnung in verschiedenen Ansichten und Schnitten schematisiert dargestellte Unipolar-Transversalflußmaschine weist ein Maschinengehäuse 10 mit einem daran gehaltenen Stator 11 sowie einen im Stator 11 umlaufenden Rotor 12 auf, der drehfest auf einer im Maschinengehäuse 10 gelagerten Rotorwelle 13 sitzt. Der Rotor 12 weist mehrere Rotormodule 15 und der Stator 11 eine gleiche Anzahl von Statormodulen 14 auf. Die Rotormodule 15 sind axial hintereinander unmittelbar auf die Rotorwelle 13 drehfest aufgesetzt, und die Statormodule 14 sind axial hintereinander in radialer Ausrichtung zum zugehörigen Rotormodul 15 am Maschinengehäuse 10 befestigt. Die Anzahl der jeweils ein Statormodul 14 und ein Rotormodul 15 umfassenden Moduleinheiten ist bestimmt durch die gewählte Strängigkeit der Unipolar-Transversalflußmaschine, die in den beschriebenen Ausführungsbeispielen zweisträngig ist und demzufolge zwei Moduleinheiten besitzt. Sie kann aber auch einstrangig oder drei- oder mehrsträngig ausgeführt werden. Die Statormodule 14 und die Rotormodule 15 und damit die Moduleinheiten sind identisch ausgebildet, so daß die Unipolar-Transversalflußmaschine eine modulare Bauweise aufweist und durch Hinzufügen oder Verringern von Moduleinheiten problemlos an bestehende Anforderungen bezüglich der Leistung und des Drehmoments angepaßt werden kann.

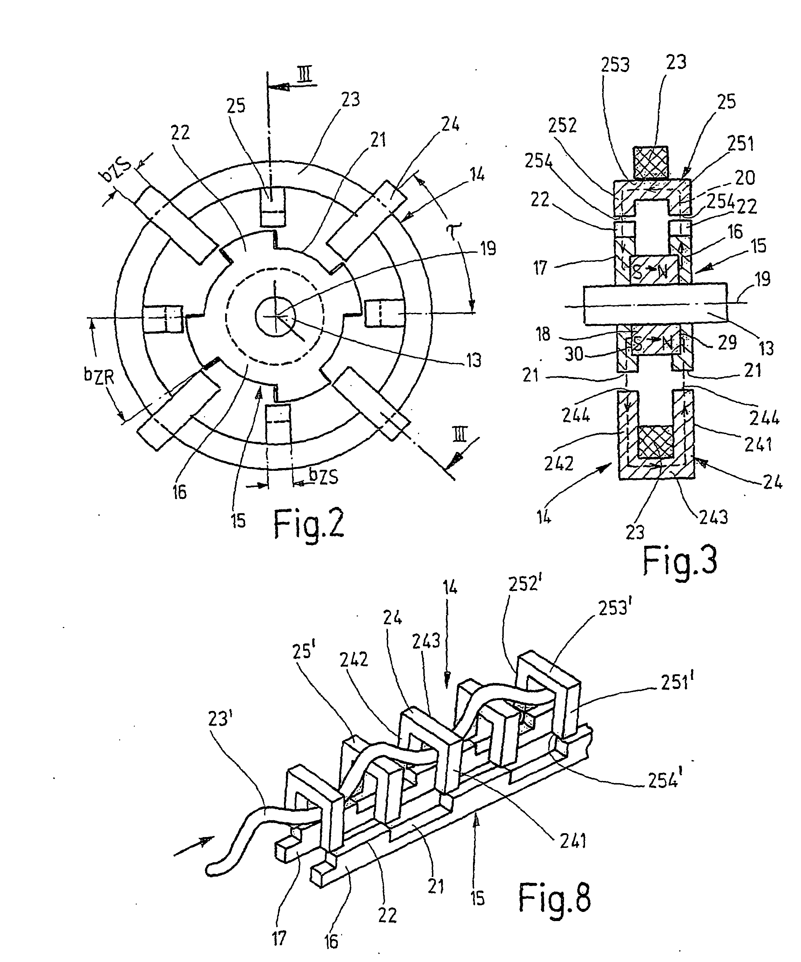

Das Rotormodul 15 besteht aus zwei koaxialen, gezahnten, ferromagnetischen Rotorringen 16, 17, die auf der Rotorwelle 13 sitzen und zwischen sich einen Permanentmagnetring 18 einspannen, der in axialer Richtung, also in Richtung der Rotor- oder Gehäuseachse 19 unipolar magnetisisert ist. In Fig. 3 ist beispielhaft die Magnetisierung des Permanentmagnetrings 18 angegeben und der vom Permanentmagnetring 18 erzeugte Magnetfluß 20 strichliniert eingezeichnet. Zur Optimierung des Gesamtstreuflußverlaufs und einer besseren Ausnutzung des Permanentmagnetrings 18 ist letzterer mit seinen ringförmigen Stirnflächen in je einer zentralen, axialen Vertiefung 29 bzw. 30 in den einander zugekehrten Seitenflächen der Rotorringe 16, 17 aufgenommen. Jeder Rotorring 16, 17 ist an seinem von der Rotorachse 19 abgekehrten Außenumfang mit konstanter Zahnteilung gezahnt, so daß die durch jeweils eine Zahnlücke 21 voneinander getrennten Zähne 22 der sich ergebenden Zahnreihe einen gleichen Drehwinkelabstand voneinander haben. Die Zähne 22 am Rotorring 16 und am Rotorring 17 fluchten in Axialrichtung miteinander. Die Rotorringe 16, 17 mit den daran einstückig angeformten Zähnen 22 sind lamelliert und werden bevorzugt aus gleichen Blechstanzschnitten, die in Achsrichtung aneinanderliegen, zusammengesetzt.

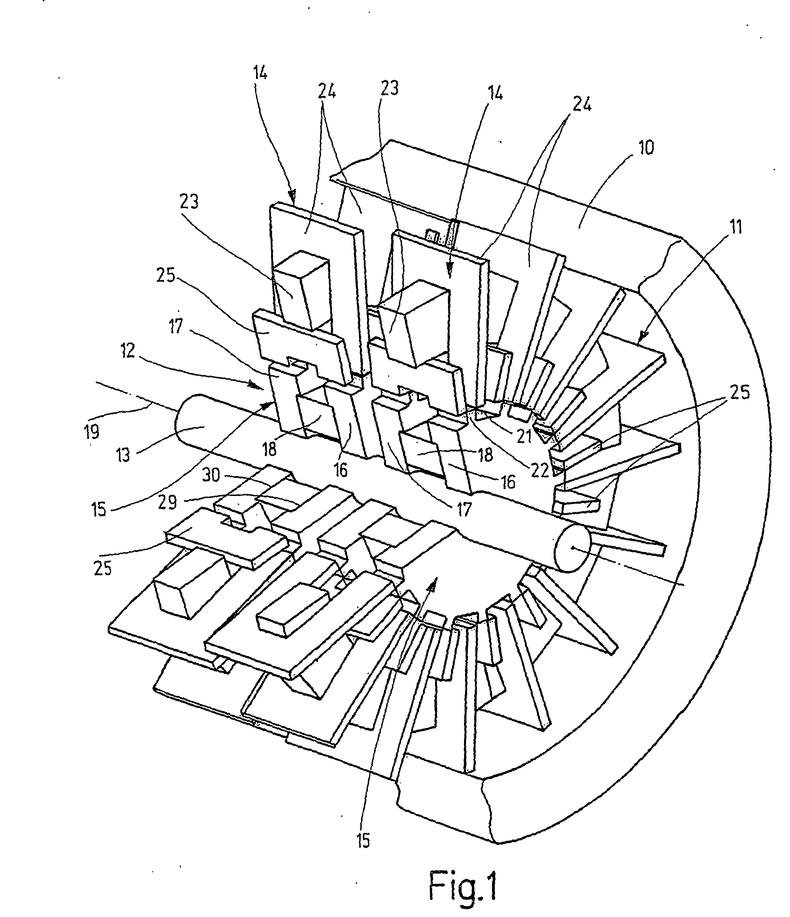

Das das Rotormodul 15 mit Radialabstand konzentrisch umschließende Statormodul 14 weist eine koaxial zur Rotorachse 19 angeordnete Ringspule 23 sowie die Ringspule 23 übergreifende U-förmige Statorjoche 24 auf. Die ebenfalls lamellierten, aus Stanzblechen zu Blechpaketen zusammengesetzten Statorjoche 24 sind hier am Maschinengehäuse 10 mit einer der Zahnteilung am Rotormodul 15 entsprechenden Jochteilung festgelegt, so daß sie den gleichen Drehwinkelabstand voneinander haben, wie die Zähne 22 der Rotorringe 16, 17. Die Statorjoche 24 sind hier so angeordnet, daß jeweils der eine Jochschenkel 241 mit dem einen Rotorring 16 und der andere Jochschenkel 242 mit dem anderen Rotorring 17 des zugeordneten Rotormoduls 12 radial fluchtet, wobei die Polflächen bildenden freien Stirnflächen 244 der Jochschenkel 241, 242 dem Rotorring 16 bzw. 17 mit radialem Spaltabstand gegenüberstehen (vgl. Fig. 1 und 3). Im Ausführungsbeispiel weisen die Stirnflächen 244 eine gleiche axiale Breite wie die Rotorringe 16, 17 auf. Vorteilhaft sind aber auch über die Rotorringe 16, 17 ein- oder beidseitig axial überstehende Stirnflächen 244 der Jochschenkel 241, 242. Zwischen den in Drehrichtung des Rotors 12 aufeinanderfolgenden Statorjochen 24 ist jeweils ein Rückschlußelement 25 angeordnet. Die ebenfalls lamellierten, als Blechpakete hergestellten Rückschlußelemente 25 haben den gleichen Drehwinkelabstand voneinander wie die Statorjoche 24 und sind gegenüber den Statorjochen 24 um eine halbe Jochteilung versetzt bzw. eine Polteilung τ angeordnet. Die Rückschlußelemente 25 erstrecken sich parallel zur Rotorachse 19 bis über beide Rotorringe 16, 17 und stehen diesen mit dem gleichen radialen Spaltabstand gegenüber wie die Statorjoche 24. Die in Drehrichtung gemessenen Breite der Rückschlußelemente 25 ist etwa gleich groß wie die in Drehrichtung gemessene Breite der Statorjoche 24, während die in Drehrichtung gemessene Breite der Zähne 22 an den Rotorringen 16, 17 kleiner als die Polteilung τ ist.

Wie aus Fig. 2 ersichtlich ist, ist die auch als Rotorzahnbreite b_{ZR} bezeichnete Breite der Zähne 22 an den Rotorringen 16, 17 im Vergleich zu der als Statorzahnbreite b_{ZS} bezeichneten Breite der Statorjoche 24 und Rückschlußelemente 25 wesentlich größer bemessen, und zwar so, daß das Verhältnis der Rotorzahnbreite b_{ZR} zur Statorzahnbreite b_{ZS} größer als 1 und kleiner als 2 ist. Die obere Grenze wird dabei vorzugsweise niedriger gehalten und beispielsweise gleich oder kleiner 1,5 gewählt. Ein verbessertes Maschinenverhalten kann erreicht werden, z.B. die Welligkeit von Momentrippeln geglättet werden, wenn die Statorjoche 24 und Rückschlußelemente 25 nicht exakt um eine Polteilung τ versetzt angeordnet sind, sondern ihr Abstand von der Polteilung τ differiert.

In dem Ausführungsbeispiel gemäß Fig. 1 - 5 haben die Rückschlußelemente 25 C-Form mit zwei jeweils einem Rotorring 16, 17 radial gegenüberliegenden kurzen Schenkeln 251, 252 und einem diese miteinander verbindenden Quersteg 253, der sich auf der der Rotorachse 19 zugekehrten Innenseite der kreisförmig ausgebildeten Ringspule 23 parallel zur Rotorachse 19 erstreckt. Durch diese Ausbildung der Rückschlußelemente 25 und der Statorjoche 24 durchläuft die kreisförmige Ringspule 23 die Statorjoche 24 am Jochschenkelgrund und läuft dazwischen über jeweils ein Rückschlußelement 25 hinweg. Die axiale Breite der Stirnfläche 254 der Schenkel 251, 252 ist hier gleich der axialen Breite der Rotorringe 16, 17 ausgeführt. Die Schenkel 251, 252 können aber auch axial über die Rotorringe 16, 17 überstehen.

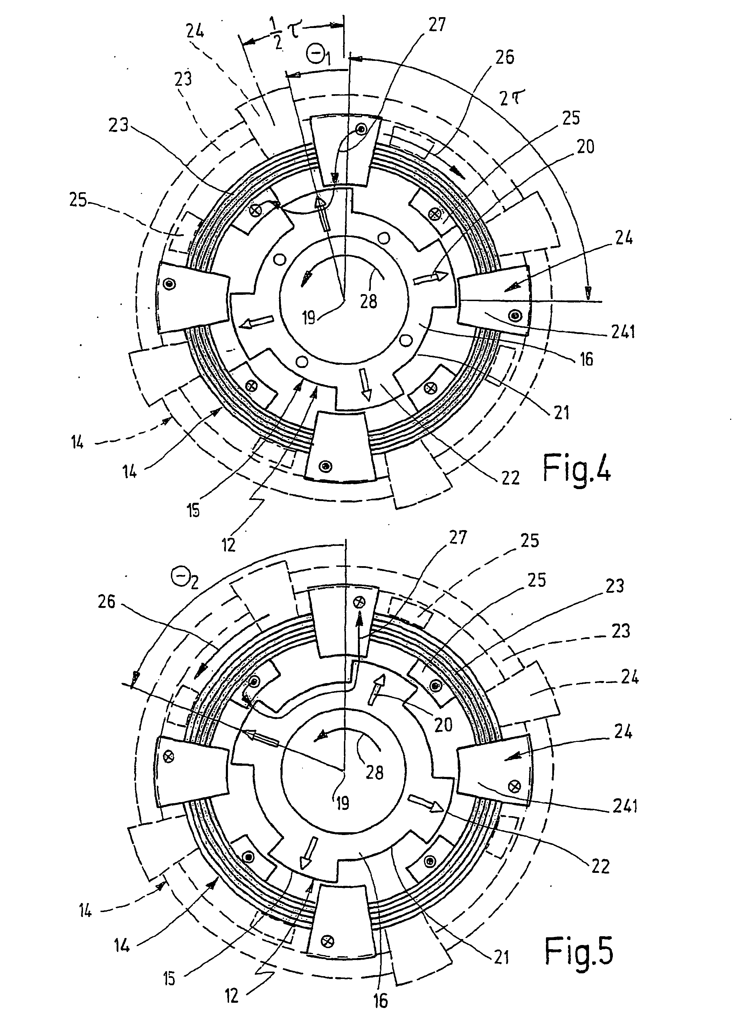

Wie in Fig. 1 perspektivisch dargestellt und in Fig. 4 und 5 schematisch skizziert ist, sind bei der zweisträngigen Ausführung der Unipolar-Transversalflußmaschine die beiden axial nebeneinander auf der Rotorwelle 13 sitzenden Rotormodule 15 der beiden Moduleinheiten miteinander fluchtend ausgerichtet und die beiden im Maschinengehäuse 10 axial nebeneinander angeordneten Statormodule 14 der beiden Moduleinheiten um 90° elektrisch gegeneinander verdreht, was einer halben Polteilung τ entspricht. Bei der in Fig. 4 und 5 dargestellten 8-poligen Ausführung der Maschine entspricht dieser Versatz einem Drehwinkel von 22,5° und bei der in Fig. 1 dargestellten 32-poligen Ausführung der Maschine einem Versatzwinkel in Drehrichtung von 5,625°. Alternativ ist es möglich, die beiden Statormodule 14 in Achsrichtung miteinander fluchtend auszurichten und die auf der Rotorwelle 13 sitzenden Rotormodule 15 um den genannten elektrischen Winkel von 90° gegeneinander zu verdrehen.

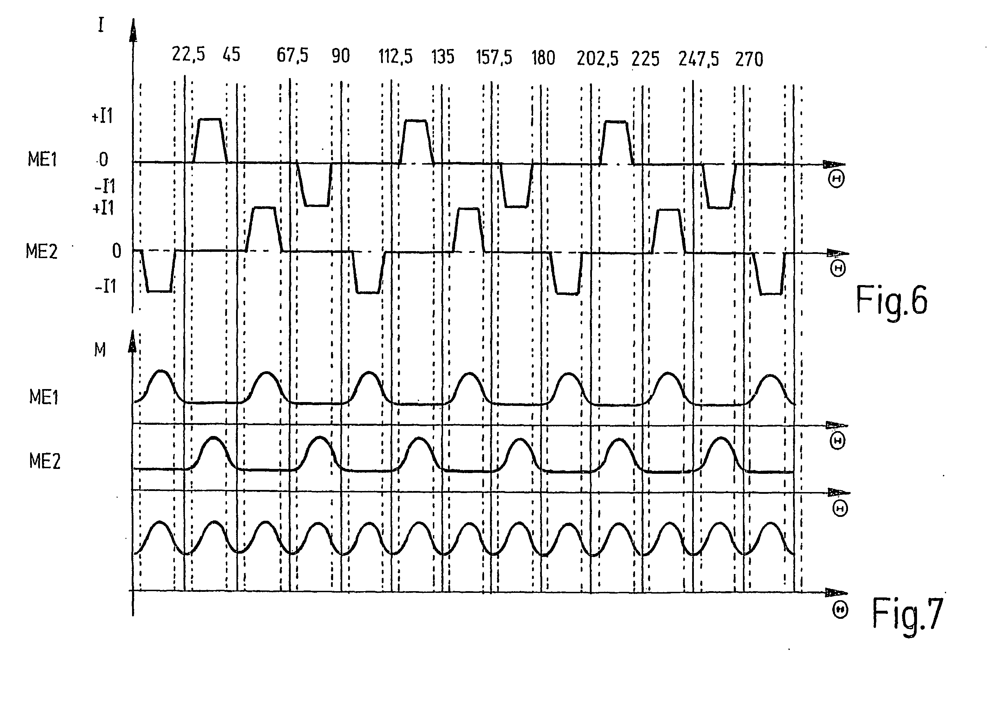

Die Wirkungsweise der Maschine ist in der Betriebsart als Motor nachfolgend anhand der Fig. 4 - 7 erläutert. In Fig. 4 und 5 ist dabei die zweisträngige Maschine in Draufsicht schematisch dargestellt, wobei das Statormodul 14 der in Draufsicht hinter der vorderen Moduleinheit liegenden Moduleinheit im Durchmesser vergrößert dargestellt ist, um es sichtbar zu machen. Die beiden auf der Rotorwelle 13 drehfest sitzenden, den Rotor 12 bildenden Rotormodule 15 der Moduleinheiten fluchten miteinander, so daß nur das Rotormodul 15 der in Draufsicht vorderen Moduleinheit zu sehen ist. Fig. 4 und 5 zeigen eine gleiche Darstellung der Maschine in zwei unterschiedlichen Drehstellungen des Rotors 12. In Fig. 6 ist ein Diagramm der Bestromung der beiden Ringspulen 23 in den beiden Statormodulen 14 in Abhängigkeit von der Drehstellung θ des Rotors 12 dargestellt. Jede Ringspule 23 wird bipolar bestromt, also abwechselnd mit einem positiven und einem negativen Stromimpuls beispielsweise mit gleicher Amplitude beaufschlagt, wobei die Stromimpulse in den beiden Ringspulen 23 der Statormodule 14 um 90° gegeneinander phasenverschoben sind.

In Fig. 4 ist bei einer Drehstellung des Rotors 12 unter einem Drehwinkel θ₁ die Ringspule 23 mit einem positiven Stromimpuls beaufschlagt. Die momentane Stromrichtung in der Ringspule 23 ist in Fig. 4 durch den der Ringspule 23 zugeordneten Pfeil 26 symbolisiert. Dieser Strom erzeugt einen Statorfluß über die Statorjoche 24, den Zähnen 22 der Rotorringe 16,17 und den Rückschlußelementen 25, wie er in Fig. 4 für ein Statorjoch 24, einen Zahn 22 und ein Rückschlußelement 25 durch Pfeil 27 angedeutet ist. Der Statorfluß 27 verläuft dabei radial in dem einen Jochschenkel 241 zu dem diesen gegenüberstehenden Zahn 22 und schließt sich über das Rückschlußelement 25, dem zweiten Jochschenkel 242 und dem Quersteg 243 (hier nicht zu sehen) des Statorjochs 24. Der Magnetfluß 20, der, wie Fig. 3 zeigt, im Rotorring 16 in Radialrichtung nach außen und im Rotorring 17 radial nach innen gerichtet ist, ist in Fig. 4 und 5 durch Pfeile 20 symbolisiert. An dem dargestellten Flußverlauf sieht man deutlich, daß der Magnetfluß 20 dem Ständerfluß 27 im Bereich der Statorjoche 24 entgegengerichtet und im Bereich der Rückschlußelemente 25 gleichgerichtet ist. Demzufolge werden die Zähne 22 von den Statorjochen 24 abgestoßen und von den Rückschlußelementen 25 angezogen, so daß sich der Rotor 12 in Pfeilrichtung 27 um einen Winkelschritt dreht. Bei gleicher, um 90° phasenverschobener Bestromung der Ringspule 23 in dem zweiten Statormodul 14 läuft der gleiche Prozeß ab, und der Rotor 12 wird um einen gleichen Drehwinkel gedreht, so daß er sich insgesamt um einen Drehwinkel θ₂ (Fig. 5) gedreht hat. Nunmehr wird die Stromrichtung des Stromimpulses in der Ringspule 23 invertiert, was durch den der Ringspule 23 zugeordneten Pfeil 26 in Fig. 5 symbolisiert ist. Bei unverändertem Magnetfluß 20 ändert sich der Statorfluß in der durch Pfeil 27 in Fig. 5 angedeuteten Weise. Infolgedessen werden die Zähne 22 des Rotors 12 von den Statorjochen 24 angezogen und von den Rückschlußelementen 25 abgestoßen, und der Rotor 12 bewegt sich in gleiche Drehrichtung 28 weiter. Um 90° phasenverschoben werden dann die der Ringspule 23 im zweiten Statormodul 14 zugeführten Stromimpulse invertiert, und der gleiche Vorgang läuft wieder ab. Wie das Bestromungsmuster der beiden Statormodule 14 in Fig. 6 zeigt, wird der beschriebene Vorgang über den gesamten Drehwinkel θ von 360° des Rotors 12 fortgesetzt, so daß der Rotor 12 umläuft.

In Fig. 7 sind die an der Rotorwelle 13 anstehenden Drehmomente über den Drehwinkel θ des Rotors 12 dargestellt. Die beiden oberen Diagramme zeigen den Verlauf der Drehmomente, wie sie von jedem der beiden Moduleinheiten anteilig geliefert werden. Das untere Diagramm in Fig. 7 zeigt das an der Rotorwelle 13 abnehmbare Gesamtdrehmoment, das sich aus der Addition der von den beiden Moduleinheiten erzeugten der Einzelmomente ergibt. Wie aus Fig. 7 zu erkennen ist, schwankt das Drehmoment M über den Drehwinkel θ, so daß der Drehmomentenverlauf mit einem unerwünschten Rippel versehen ist. Diesen Rippel kann man weniger merkbar machen, wenn einerseits die Polzahl der Maschine erhöht und andererseits die Anzahl der Moduleinheiten der Maschine und damit die Anzahl der Stränge vergrößert wird. Als elektrisch und fertigungstechnisch günstig hat sich dabei die in Fig. 1 dargestellte 32-polige Ausführung der Maschine erwiesen.

Die im Ausführungsbeispiel beschriebene zweisträngige Maschine kann mit mehr als zwei Strängen ausgeführt werden. Ist die Anzahl m der Stränge und damit die Anzahl der räumlich parallel angeordneten Moduleinheiten mit auf einer gemeinsamen Rotorwelle 13 sitzenden identischen Rotormodulen 15 eine ganze Zahl größer als 2, so sind die am Stator 11 axial hintereinander angeordneten Statormodule 14 um einen elektrischen Winkel von 360°/m gegeneinander zu verschieben, bei einer dreisträngigen Maschine mit drei Moduleinheiten also um 120° elektrisch.

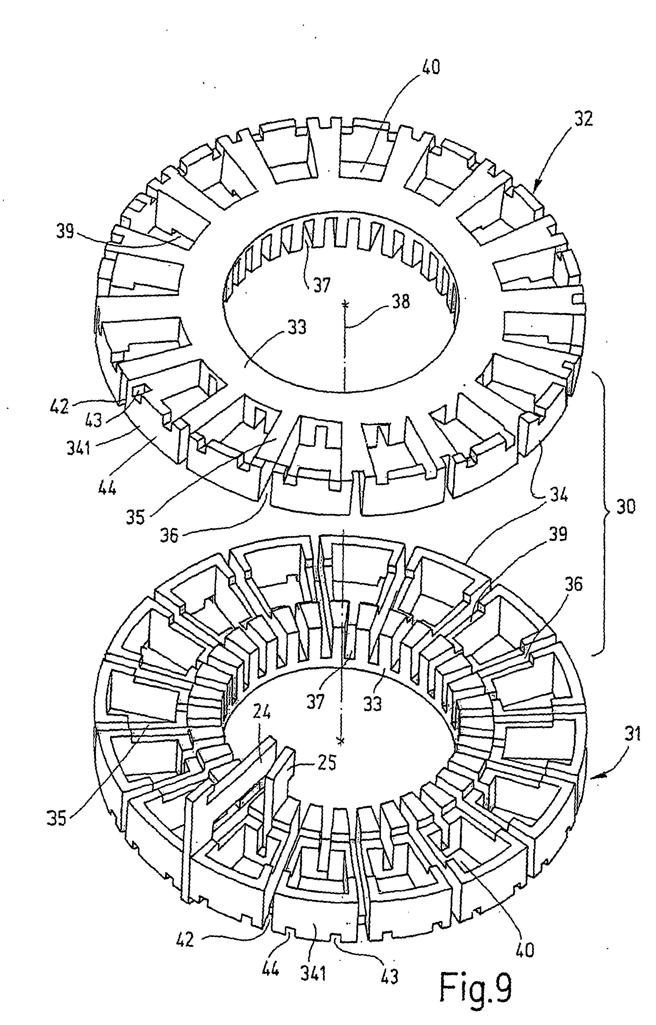

In den Ausführungsbeispielen der Unipolar-Transversalflußmaschine gemäß Fig. 1 - 5 ist die Ringspule 23 kreisförmig ausgeführt und konzentrisch zur Rotorachse 19 angeordnet. Dies erfordert eine unterschiedliche geometrische Ausbildung der Statorjoche 24 und der Rückschlußelemente 25. In einer alternativen Ausführungsform einer Moduleinheit, wie sie in Fig. 8 perspektivisch ausschnittweise als Abwicklung dargestellt ist, sind die Rückschlußelemente 25' identisch wie die Stator Joche 24 ausgebildet. Die Statorjoche 24 sind hier nur schematisch dargestellt und in ihren Proportionen nicht den Proportionen der Zähne 22 der Rotorringe 16,17 angepaßt, wie dies beispielsweise in Fig. 4 und 5 der Fall ist. Wie die Statorjoche 24 haben die Rückschlußelemente 25' U-Form mit zwei jeweils einem Rotorring 16 bzw. 17 radial gegenüberliegenden langen Schenkeln 251' und 252' und einem diesen miteinander verbindenden, parallel zur Rotorachse 19 sich erstreckenden Quersteg 253'. Die Ringspule 23', die zur Erzeugung des Statorflusses einerseits durch die Statorjoche 24 hindurch und andererseits über die Querstege 253' der Rückschlußelemente 25' hinweggeführt werden muß, ist demzufolge in der Radialebene punktsymmetrisch zur Rotorachse 19 mäanderförmig geformt, so daß sie einerseits an der zur Rotorachse 19 hin gerichteten Innenseite der Querstege 243 der Statorjoche 24 und andererseits an der von der Rotorachse 19 abgekehrten Außenseite der Querstege 253' der Rückschlußelemente 25' verläuft.

Jedes der vorstehend beschriebenen Statormodule 14 ist als selbsttragende Konstruktion ausgeführt und ist hierzu in einem aus zwei Halbschalen 31, 32 bestehenden Gehäuse 30 aufgenommen. Die beiden Halbschalen 31,32 sind identisch ausgebildet und spiegelsymetrisch aufeinandergesetzt, wie dies aus der Explosionsdarstellung in Fig. 9 ersichtlich ist. Jede Halbschale 31, 32 weist eine gitterartige Struktur mit einem Innenring 33 und einem dazu konzentrischen Außenring 34 auf, die durch Radialstege 35 einstückig miteinander verbunden sind. In den Halbschalen 31, 32 sind einerseits Radialnuten 36 zur Aufnahme der Statorjoche 24, die sich über Innenring 33, Radialsteg 35 und Außenring 34 erstrecken, sowie andererseits Radialnuten 37 zum Einstecken der Rückschlußelemente 25 ausgebildet, die sich nur über den Innenring 33 erstrecken. Die Anzahl der Radialnuten 36, 37 insgesamt entspricht der Anzahl der Statorelemente (Statorjoche und Rückschlußelemente) und beträgt im Ausführungsbeispiel der Fig. 9 für eine 32-polige Unipolar-Transversalflußmaschine zweiunddreißig. Die Breite der Radialnuten 36, 37 ist dabei auf die Dicke der Statorjoche 24 bzw. Rückschlußelemente 25 abgestimmt, und die axiale Tiefe der Radialnuten 36, 37 ist geringfügig größer bemessen als die halbe axiale Breite der Statorjoche 24 bzw. der Rückschlußelemente 25. Neben diesen Radialnuten 36, 37 weisen die beiden aufeinandergesetzten Halbschalen 31, 32 spiegelsymetrisch einander gegenüberliegende, konzentrisch zur Gehäuseachse 38 angeordnete Vertiefungen 39 zur Aufnahme der Ringspule 23 des Statormoduls 14 (Fig. 1) auf. Die Vertiefungen 39 sind dabei in die Radialstege 35 eingebracht, so daß die Ringspule 23, die in Fig. 8 nicht dargestellt ist, über die von Innenring 33, Außenring 34 und den Radialstegen 35 eingeschlossenen Luftdurchsatzöffnungen 40 hinweg verläuft, durch die hindurch eine optimale Wärmeabfuhr von der Ringspule 23 und den Statorjochen 24 und Rückschlußelementen 25 gewährleistet ist.

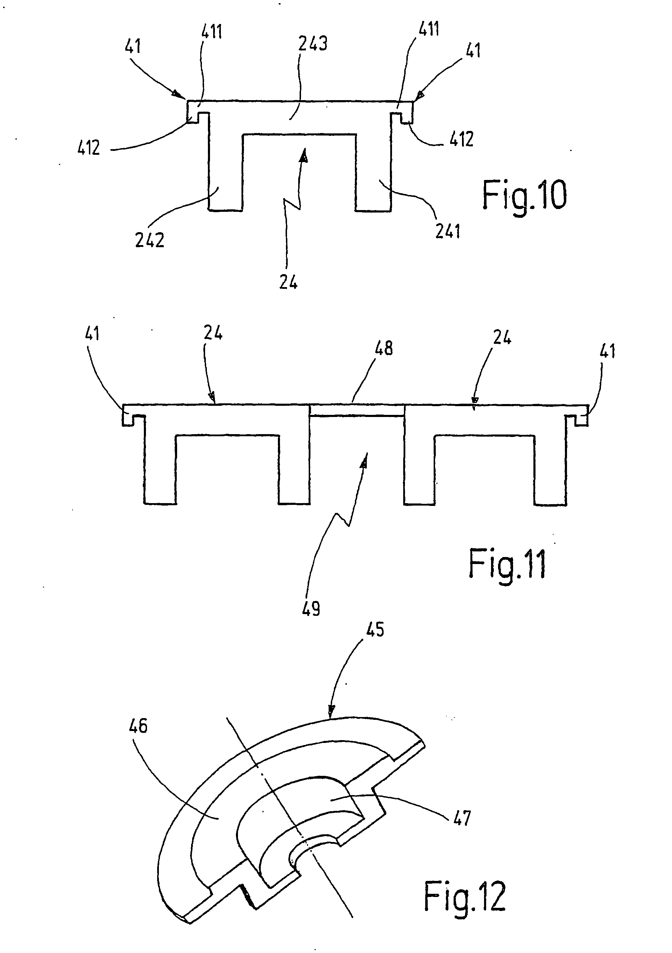

Die Statorjoche 24 und die Radialnuten 36 sind so aufeinander abgestimmt, daß bei in die Radialnuten 36 und 37 eingesetzten Statorjochen 24 und Rückschlußelementen 25 die beiden Halbschalen 31, 32 des Gehäuses 30 radial und axial unverschieblich fixiert sind. Hierzu sind die Statorjoche 24 gegenüber den Ausführungsbeispielen in Fig. 1 - 3 modifiziert und weisen - wie es bei einem in Fig. 10 in Draufsicht und in Fig. 9 in Einsetzposition im Gehäuse 30 dargestellten Statorjoch 24 zu sehen ist - an beiden Seiten ihres Querstegs 243 jeweils einen nach außen radial vorspringenden Haken 41 mit Hakenwurzel 411 und sich parallel zu den Jochschenkeln 251, 252 erstreckendem Übergreifungslappen 412 auf, der bei in die Radialnut 36 eingestecktem Statorjoch 24 (Fig. 9) einen Radialsteg 35 in den beiden Halbschalen 31, 32 auf dessen von der Radialnut 36 abgekehrten Rückseite formschlüssig übergreift. Hierzu ist an dem im Außenring 34 liegenden Ende jeder Radialnut 36 zur Aufnahme der Statorjoche 24 eine radiale Ausnehmung 42 in den Nutboden eingebracht, deren radiale Tiefe so bemessen ist, daß bei lagerichtig in die Radialnut 36 eingesetztem Statorjoch 24 die Hakenwurzel 411 des Hakens 41 mit ihrer zum Innenring 33 weisenden Unterkante im Grunde der Ausnehmung 42 anschlägt. Damit sind einerseits die Statorjoche 24 in Radialrichtung toleranzgenau positioniert und klammern anderseits mit den Übergreifungslappen 412 ihrer Haken 41 die beiden Halbschalen 31, 32 aneinander.

Zur Sicherstellung eines selbsttätigen Anlaufs der Unipolar-Transversalflußmaschine wird diese mindestens zweisträngig ausgeführt, wie dies in Fig. 1 dargestellt ist. Jedes Statormodul 14 wird dabei in dem vorstehend beschriebenen Gehäuse 30 aufgenommen, und die beiden Gehäuse 30 werden gegeneinander um 90° elektrisch verdreht axial aneinandergesetzt. Bei der 32-poligen Ausführung der Unipolar-Transversalflußmaschine entspricht der Drehversatz einem Drehwinkel von 5,625° räumlich. Um diesen Drehversatz der Gehäuse 30 toleranzgenau zu gewährleisten, sind in den zwischen den Radialstegen 35 sich erstreckenden, die Luftdurchsatzöffnungen 40 nach außen begrenzenden Ringabschnitten 341 des Außenrings 34 einer jeden Halbschale 31 bzw. 32 von der von den Radialnuten 36, 37 abgekehrten Außenseite der Halbschale 31 bzw. 32 aus zwei voneinander beabstandete, identische Radialaussparungen 43, 44 eingebracht. Die Breite der Radialaussparungen 43, 44 entspricht der Breite der an den Statorjochen 24 beidseitig vorspringenden Haken 41 und deren radiale Tiefe der axialen Abmessung der Haken 41. Der in Umfangsrichtung gesehene Abstand der Radialaussparung 43 zu der in Umfangsrichtung des Gehäuses 30 nachfolgenden Radialnut 36 für ein Statorjoch 24 und der gleiche Abstand der Radialaussparung 44 zu der vorausgehenden Radialnut 36 für ein Statorjoch 24 entspricht dem Winkel, um den bei der zweisträngigen Ausführung der Unipolar-Transversalfluß-maschine die beiden Statormodule 14 gegeneinander verdreht werden müssen. Bei der zweisträngigen Ausführung beträgt der genannte Abstand 90° elektrisch, also bei der 32-poligen Maschine 5,625° räumlich. Bei einer mehrsträngigen Maschine beträgt dieser Drehwinkelversatz 360°/m, wobei m die Zahl der aneinandergesetzten Statormodule 14 und größer als 2 ist. Bei aufeinanderliegenden Halbschalen 31, 32 greifen die Haken 41 in die Radialaussparungen 43 oder 44 der benachbarten Halbschale des Gehäuses 30 vom nächsten Statormodul 14 ein, so daß beide Statormodule 14 in Umfangsrichtung genau positioniert sind.

Die Montage des Statormoduls 14 im Gehäuse 30 erfolgt durch Fügetechnik wie folgt:

Zunächst werden in einer Halbschale 31 alle Radialnuten 37 im Innenring 33 mit den Rückschlußelementen 25 bestückt, wie dies in Fig. 9 in der unteren Halbschale 31 für ein Rückschlußelement dargestellt ist. Danach wird die Ringspule 23 (Fig. 1) in die in Umfangsrichtung fluchtenden Vertiefungen 39 in den Radialstegen 35 eingelegt. Dann wird die andere Halbschale 32 auf die vormontierte Halbschale 31 aufgesetzt, wobei die aus der Halbschale 31 axial vorstehenden Rückschlußelemente 25 in die Radialnuten 37 der Halbschale 32 eindringen. Anschließend werden von außen her die Statorjoche 24 in die Radialnuten 36 eingeschoben, bis die Wurzeln 411 der vorspringenden Haken 41 im Grunde der Ausnehmungen 42 anschlagen, wobei gleichzeitig die Übergreifungslappen 412 die Radialstege 35 auf deren Rückseiten übergreifen und so die beiden Halbschalen 31, 32 in Achsrichtung miteinander verklemmen. Die Lage der Statorjoche 24 in den beiden Halbschalen 31, 32 ist in Fig. 9 für ein Statorjoch 24 in der unteren Halbschale 31 dargestellt.

Bei der mehrsträngigen Ausführung der Unipolar-Transversalflußmaschine wird ein in gleicher Weise gefügter zweiter Statormodul 14 mit dem Gehäuse 30 an das erste Gehäuse 30 angesetzt, wobei - wie vorstehend beschrieben - die Haken 41 der Statorjoche 24 in die einen der Radialaussparungen 43 oder 44 des zweiten Gehäuses 30 eingreifen und die Verdrehung der Statormodule 14 um 90° elektrisch gegeneinander gewährleisten. Auf die beiden äußeren Halbschalen 31, 32 der insgesamt vier Halbschalen 31, 32 wird jeweils ein Lagerschild 45 zur Aufnahme der Rotorwelle 13 befestigt. Der Lagerschild 45 ist hälftig in Fig. 12 in perspektivischer Darstellung zu sehen. Zwei solche Lagerschildhälften 45 werden mit einem Flanschteil 46 auf dem Innenring 33 der Halbschale 31 bzw. 32 befestigt. Ein rechtwinklig vom Flanschteil 46 abstehender Lagerstutzen 47 nimmt das Drehlager für die Rotorwelle 13 (Fig. 1) auf.

Wie bereits vorstehend erwähnt, kann eine mehrsträngige Ausführung der Unipolar-Transversalflußmaschine auch in der Weise realisiert werden, daß die fest nebeneinander angeordneten Statormodule 14 axial fluchtend ausgerichtet sind und die Rotormodule 15 um einen festen Winkel gegeneinander auf der Rotorwelle 13 verdreht angeordnet sind. In diesem Fall ergibt sich die Möglichkeit, die Statorjoche 24 der in Achsrichtung nebeneinanderliegenden Statormodule 14 in ihrem Querstegbereich durch axial sich erstreckende Brücken 48 miteinander zu verbinden, wie dies für eine zweisträngige Ausführung in Fig. 11 dargestellt ist. Die Statorjoche 24 mit Brücke 48 sind dabei als einstückige Stanzteile 49 ausgeführt. An den voneinander abgekehrten Außenseiten der Statorjoche 24 ist jeweils wiederum ein vorspringender Haken 41 angeordnet. Die Stanzteile 49 werden nach Vormontage in die miteinander fluchtenden Radialnuten 36 in den vier Halbschalen 31, 32 eingelegt, wobei die Brücken 48 in den radialen Ausnehmungen 42 in den beiden aneinanderliegenden Halbschalen 31, 32 einliegen und die vorspringenden Haken 41 jeweils die Radialstege 35 der beiden äußeren Halbschalen 31, 32 auf deren von den Radialnuten 36 abgekehrten Rückseite übergreifen.

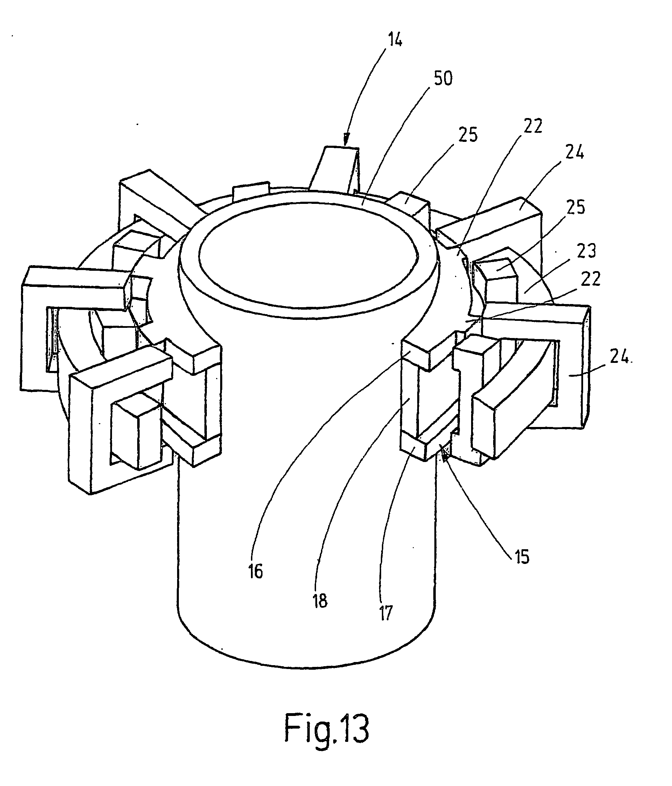

In Fig. 13 ist eine Moduleinheit für eine als Hohlwellenversion ausgeführte 16-polige Universal-Transversalflußmaschine dargestellt. Die Moduleinheit besteht wiederum aus einem Statormodul 14 und einem Rotormodul 15, die beide wie vorstehend beschrieben aufgebaut sind, so daß in Fig. 13 gleiche Bauelemente mit gleichen Bezugszeichen versehen sind. In dem Ausführungsbeispiel der Fig. 13 sitzt das Rotormodul 15 drehfest auf einer Hohlwelle 50. Die komplette Unipolar-Transversalflußmaschine ist wie in Fig. 1 zweisträngig ausgeführt und besitzt demzufolge zwei Moduleinheiten mit zwei Statormodulen 14 und zwei auf der Hohlwelle 50 nebeneinander angeordneten Rotormodulen 15, wobei das Statormodul 14 oder das Rotormodul 15 der zweiten Moduleinheit wiederum um 90° elektrisch gegenüber der ersten Moduleinheit verdreht ist.

Eine solche Hohlwellenversion der Unipolar-Transversalflußmaschine eignet sich besonders vorteilhaft als Antriebsmotor für eine elektronmechanische Radbremse, wie sie beispielsweise in der WO 96/00301 beschrieben ist. Das vom Antriebsmotor angetriebene Rotations/Translations-Umsetzungsgetriebe ist dann im Innern der Hohlwelle 50 untergebracht, so daß eine extrem kleine Bauform der Radbremse erzielt wird.

Selbstverständlich ist es möglich, die Unipolar-Transversalflußmaschine gemäß dem Ausführungsbeispiel in Fig. 13 auch mehrsträngig, z.B. dreisträngig, auszuführen, doch bietet die zweisträngige Ausführung hinsichtlich des erforderlichen Platzbedarfs für die Unterbringung der elektromechanischen Radbremse die größeren Vorteile.

## Patentansprüche

1. Unipolar-Transversalflußmaschine mit einem um eine Rotorachse (19) drehbaren Rotor (12), der mindestens ein Rotormodul (15) aufweist, das aus jeweils zwei koaxialen, mit konstanter Zahnteilung gezahnten, ferromagnetischen Rotorringen (16,17) und einem zwischen den Rotorringen (16,17) eingespannten, in Richtung der Rotorachse (19) unipolar magnetisierten Permanentmagnetring (18) zusammengesetzt ist, und mit einem zur Rotorachse (19) konzentrischen Stator (11), der mindestens ein dem Rotormodul (15) zugeordnetes Statormodul (14) aufweist, das aus einer koaxial zur Rotorachse (19) angeordneten Ringspule (23;23') und diese übergreifenden U-förmigen Statorjochen (24), die mit einer der Zahnteilung entsprechenden Teilung an einem Gehäuse (10) festgelegt sind, bestehen, wobei die Zahnung der Rotorringe (16,17) ausschließlich an dem von der Rotorachse (19) abgekehrten Außenumfang der Rotorringe (16,17) vorgenommen ist und in dem Statormodul (14) die Statorjoche (24) so angeordnet sind, daß der eine Jochschenkel (241) der Statorjoche (24) dem einen Rotorring (16) und der andere Jochschenkel (242) der Statorjoche (24) dem anderen Rotorring (17) jeweils mit radialem Spaltabstand gegenübersteht, **dadurch gekennzeichnet, daß** zwischen in Drehrichtung des Rotors (12) aufeinanderfolgenden Statorjochen (24) jeweils ein Rückschlußelement (25;25') angeordnet ist, das sich axial über beide Rotorringe (16,17) erstreckt und diesen mit radialem Spaltabstand gegenübersteht.

2. Maschine nach Anspruch 1, **dadurch gekennzeichnet, daß** der Rotor (12) zwei gleiche Rotormodule (15) und der Stator (11) zwei gleiche Statormodule (14) aufweist und daß die Statormodule (14) axial nebeneinander in einem Gehäuse (10) und die Rotormodule (15) axial nebeneinander auf einer Rotorwelle (13) in gegenseitiger Zuordnung jeweils so festgesetzt sind, daß die Statormodule (14) oder die Rotormodule (15) jeweils um 90° elektrisch gegeneinander verdreht sind.

3. Maschine nach Anspruch 1, **dadurch gekennzeichnet, daß** der Rotor (12) m Rotormodule (15) und der Stator (11) m Statormodule (14) aufweist und daß die Statormodule (14) axial nebeneinander in einem Gehäuse (10) und die Rotormodule (15) axial nebeneinander auf einer Rotorwelle (13) in gegenseitiger Zuordnung jeweils so festgesetzt sind, daß die Statormodule (14) oder die Rotormodule (15) jeweils um 360°/m elektrisch, wobei m eine ganze Zahl und größer als 2 ist.

4. Maschine nach einem der Ansprüche 1 - 3, **dadurch gekennzeichnet, daß** die Statorjoche (24) und Rückschlußelemente (25;25') sowie die Rotorringe (16,17) lamelliert sind.

5. Maschine nach einem der Ansprüche 1 - 4, **dadurch gekennzeichnet, daß** die Rückschlußelemente (25;25') um eine Polteilung zu den Statorjochen (24) versetzt angeordnet sind.

6. Maschine nach einem der Ansprüche 1 - 5, **dadurch gekennzeichnet, daß** der radiale Spaltabstand zwischen den Statorjochen (24) und den Rotorringen (16,17) einerseits und zwischen den Rückschlußelementen (25;25') und den Rotorringen (16,17) andererseits gleich groß bemessen ist.

7. Maschine nach einem der Ansprüche 1 - 6, **dadurch gekennzeichnet, daß** die freie Stirnfläche (244) der Jochschenkel (241,242) der Statorjoche (24) mindestens die gleiche axiale Breite wie die Rotorringe (16,17) aufweisen, vorzugsweise über diese ein- oder beidseitig vorstehen.

8. Maschine nach einem der Ansprüche 1 - 7, **dadurch gekennzeichnet, daß** die Breite der Statorjoche (24) und die Breite der Rückschlußelemente (25;25'), jeweils in Drehrichtung gemessen, in etwa gleich groß ist.

9. Maschine nach einem der Ansprüche 1 - 8, **dadurch gekennzeichnet, daß** das Verhältnis der Zahnbreite (b_{ZR}) der Zähne (22) an den Rotorringen (16,17) zur Breite (b_{ZS}) der Statorjoche (24), und Rückschlußelemente (25) jeweils in Drehrichtung gesehen, größer als 1 und kleiner als 2, vorzugsweise gleich oder kleiner 1,5, gewählt ist.

10. Maschine nach einem der Ansprüche 1 - 9, **dadurch gekennzeichnet, daß** die Rückschlußelemente (25) C-Form mit zwei jeweils einem Rotorring (16,17) radial gegenüberliegenden kurzen Schenkeln (251,252) und einem diese miteinander verbindende Quersteg (253) aufweisen, der sich auf der der Rotorachse (19) zugekehrten Innenseite der kreisförmig ausgebildeten Ringspule (23) parallel zur Rotorachse (19) erstreckt.

11. Maschine nach einem der Ansprüche 1 - 9, **dadurch gekennzeichnet, daß** die Rückschlußelemente (25') U-Form mit zwei jeweils einem Rotorring (16,17) radial gegenüberliegenden langen Schenkeln (251',252') und einem diese miteinander verbindenden, parallel zur Rotorachse (19) sich erstreckenden Quersteg (253') aufweisen und daß die Ringspule (23') des Statormoduls (14) in der Radialebene punktsymmetrisch zur Rotorachse (19) mäanderförmig derart geformt ist, daß sie aufeinanderfolgend abwechselnd zwischen den Jochschenkeln (241,242) eines Statorjochs (24) hindurch und über die von der Rotorachse (19) abgekehrte Außenseite eines Querstegs (253') eines Rückschlußelements (25') hinweg verläuft.

12. Maschine nach Anspruch 11, **dadurch gekennzeichnet, daß** die Statorjoche (24) und Rückschlußelemente (25') identisch ausgebildet sind.

13. Maschine nach einem der Ansprüche 10 - 12, **dadurch gekennzeichnet, daß** die freie Stirnfläche (254 bzw. 254') der Schenkel (251, 252 bzw. 251', 252') der Rückschlußelemente (25 bzw. 25') zumindest die gleiche axiale Breite wie die Rotorringe (16, 17) aufweisen, vorzugsweise über diese ein- oder beidseitig vorstehen.

14. Maschine nach einem der Ansprüche 1 - 13, **dadurch gekennzeichnet, daß** die Statormodule (14) bipolar in Abhängigkeit vom Drehwinkel (θ) des Rotors (12) mit Stromimpulsen bestromt werden und daß die Stromimpulse in den Statormodulen (14) bei zwei vorhandenen Statormodulen (14) um 90° und bei m vorhandenen Statormodulen (14) um 360°/m gegeneinander phasenverschoben sind, wobei m eine ganze Zahl und größer 2 ist.

15. Maschine nach einem der Ansprüche 1 - 14, **dadurch gekennzeichnet, daß** jedes Statormodul (14) in einem aus zwei Halbschalen (31, 32) bestehenden Gehäuse (30) aufgenommen ist, die identisch ausgebildet und spiegelsymetrisch aufeinandergesetzt sind und axial miteinander fluchtende Radialnuten (36, 37) zum Einstecken einerseits der Statorjoche (24) und andererseits der Rückschlußelemente (25) sowie spiegelsymetrisch einander gegenüberliegende konzentrisch zur Gehäuseachse (38) ausgerichtete Vertiefungen (39) zum Aufnehmen der Ringspule (23) aufweisen.

16. Maschine nach Anspruch 15, **dadurch gekennzeichnet, daß** jede Halbschale (31, 32) eine gitterartige Struktur mit einem Innenring (33) und einem dazu konzentrischen Außenring (34) aufweist, die durch Radialstege (35) einstückig miteinander verbunden sind, und daß die die Rückschlußelemente (25) aufnehmenden Radialnuten (37) im Innenring (33) eingebracht sind und die die Statorjoche (24) aufnehmenden Radialnuten (36) sich über Innenring (33), Radialsteg (35) und Außenring (34) erstrecken.

17. Maschine nach Anspruch 16, **dadurch gekennzeichnet, daß** die Vertiefungen (39) für die Ringspule (23) in die Radialstege (35) eingebracht sind.

18. Maschine nach einem der Ansprüche 15 - 17, **dadurch gekennzeichnet, daß** die Statorjoche (24) und die sie aufnehmenden Radialnuten (36) so aufeinander abgestimmt sind, daß bei in den Radialnuten (36, 37) eingesetzten Statorjochen (24) und Rückschlußelementen (25) die beiden Halbschalen (31, 32) aneinander radial und axial unverschieblich fixiert sind.

19. Maschine nach Anspruch 18, **dadurch gekennzeichnet, daß** die Breite der Radialnuten (36, 37) auf die Dicke der Statorjoche (24) und Rückschlußelemente (25) abgestimmt ist und die axiale Tiefe der Radialnuten (36, 37) geringfügig größer bemessen ist, als die halbe axiale Breite der Statorjoche (24) und Rückschlußelemente (25).

20. Maschine nach Anspruch 18 oder 19, **dadurch gekennzeichnet, daß** die Statorjoche (24) an beiden Seiten ihres Querstegs (243) jeweils einen vorspringenden Haken (41) aufweisen, der bei in die Radialnuten (36) eingesteckten Statorjochen (24) einen Radialsteg (35) der beiden Halbschalen (31, 32) auf dessen von der Radialnut (36) abgekehrten Rückseite formschlüssig übergreift.

21. Maschine nach Anspruch 20 in mehrsträngiger Ausführung, bei der die Rotormodule (15) axial fluchtend auf der Rotorwelle (13) angeordnet und die Statormodule (14) gegeneinander um einen festen Winkel verdreht sind, **dadurch gekennzeichnet, daß** in den zwischen den Radialstegen (35) sich erstreckenden Ringabschnitten (341) des Außenrings (34) der Halbschalen (31, 32) von der von den Radialnuten (36) abgekehrten Außenseiten der Halbschale (31) aus zwei voneinander beabstandete Radialaussparungen (42, 43) eingebracht sind, deren Breite in Umfangsrichtung der Breite der an den Statorjochen (24) vorstehenden Haken (41) und deren radiale Tiefe der axialen Abmessung der Haken (41) entspricht, und daß die eine Radialausnehmung (43) um den festen Drehwinkel zu der nachfolgenden Radialnut (36) für ein Statorjoch (24) und die andere Radialausnehmung (44) um den gleichen festen Drehwinkel zu der vorausgehenden Radialnut (36) für ein Statorjoch (24) versetzt angeordnet ist.

22. Maschine nach Anspruch 18 oder 19 in mehrsträngiger Ausführung, bei der die Statormodule (14) axial fluchten und die Rotormodule (15) um einen festen Winkel gegeneinander verdreht auf der Rotorwelle (13) angeordnet sind, **dadurch gekennzeichnet, daß** die Statorjoche (24) der in Achsrichtung nebeneinanderliegenden Statormodule (14) in ihrem Querstegbereich durch axial sich erstreckende Brücken (48) miteinander verbunden sind, daß die beiden außenliegenden der miteinander verbundenen Statorjoche (24) auf ihrer äußeren Seite jeweils einen vom Quersteg (243) vorspringendne Haken (41) aufweist, der bei in die Radialnuten (36) eingesteckten Statorjochen (24) einen Radialsteg (35) der beiden äußeren Halbschalen (31, 32) auf dessen von der Radialnut (36) abgekehrten Rückseite übergreift.

23. Maschine nach Anspruch 22, **dadurch gekennzeichnet, daß** die über Brücken (48) miteinander verbundenen Statorjoche (24) als einstückige Stanzteile (49) ausgeführt sind.

24. Maschine nach einem der Ansprüche 20 - 23, **dadurch gekennzeichnet, daß** an dem im Außenring (34) liegenden Ende einer jeden Radialnut eine radiale Ausnehmung (42) in den Nutboden eingebracht ist, deren radiale Tiefe so bemessen ist, daß bei lagerichtig in die Radialnut (36) eingesetztem Statorjoch (24) die Hakenwurzel (411) des am Quersteg (23) vorspringenden Hakens (41) mit ihrer zum Innenring (33) weisenden Unterkante im Grunde der Ausnehmung (42) anschlägt.

25. Maschine nach einem der Ansprüche 15 - 24, **dadurch gekennzeichnet, daß** zur Drehlagerung der Rotorwelle (13) zwei Lagerschilde (45) auf die beiden außenliegenden Halbschalen (31, 32) aufgesetzt sind, die mit einem Flanschteil (46) auf den Halbschalen (31, 32) befestigt sind und in einem davon abstehenden koaxialen Lagerstutzen (47) die Rotorwelle (13) aufnehmen.

26. Maschine nach einem der Ansprüche 1 - 25, **dadurch gekennzeichnet, daß** das mindestens eine Rotormodul (15) auf einer Hohlwelle (50) drehfest angeordnet ist.

## Claims

1. Unipolar transverse flux machine having a rotor (12) which can rotate about a rotor axis (19) and has at least one rotor module (15) which is composed of in each case two coaxial ferromagnetic rotor rings (16, 17) which have teeth with a constant tooth pitch, and of a permanent magnet ring (18) which is clamped in between the rotor rings (16, 17) and is magnetized in a unipolar manner in the direction of the rotor axis (19), and having a stator (11) which is concentric with respect to the rotor axis (19) and has at least one stator module (14) which is associated with the rotor module (15) and comprises an annular coil (23; 23'), which is arranged coaxially with respect to the rotor axis (19) and U-shaped stator yokes (24), which engage over the latter and are fixed on a housing (10) with a pitch which corresponds to the tooth pitch, wherein the tooth system of the rotor rings (16, 17) is provided exclusively on the outer circumference of the rotor rings (16, 17) facing away from the rotor axis (19) and the stator yokes (24) are arranged in the stator module (14) such that one yoke limb (241) of the stator yokes 24) is opposite one rotor ring (16), and the other yoke limb (242) of the stator yokes (24) is opposite the other rotor ring (17), in each case with a radial gap separating them, **characterized in that** a magnetic return path element (25; 25') is in each case arranged between successive stator yokes (24) in the rotation direction of the rotor (12), extends axially over both rotor rings (16, 17), and is opposite them with a radial gap separating them.

2. Machine according to Claim 1, **characterized in that** the rotor (12) has two identical rotor modules (15) and the stator (11) has two identical stator modules (14), and **in that** the stator modules (14) are fixed axially alongside one another in a housing (10), and the rotor modules (15) are fixed axially alongside one another on a rotor shaft (13) such that they are each associated with one another and that the stator modules (14) or the rotor modules (15) are each twisted through 90° electrical with respect to one another.

3. Machine according to Claim 1, **characterized in that** the rotor (12) has m rotor modules (15) and the stator (11) has m stator modules (14), and **in that** the stator modules (14) are fixed axially alongside one another in a housing (10), and the rotor modules (15) are fixed axially alongside one another on a rotor shaft (13) such that they are each associated with one another such that the stator modules (14) or the rotor modules (15) are each twisted through 360°/m electrical, where m is an integer and is greater than 2.

4. Machine according to one of Claims 1-3, **characterized in that** the stator yokes (24) and the magnetic return path elements (25; 25') as well as the rotor rings (16, 17) are laminated.

5. Machine according to one of Claims 1-4, **characterized in that** the magnetic return path elements (25; 25') are arranged offset by one pole pitch with respect to the stator yokes (24).

6. Machine according to one of Claims 1-5, **characterized in that** the radial gap separation between the stator yokes (24) and the rotor rings (16, 17) on the one hand, and between the magnetic return path elements (25; 25') and the rotor rings (16, 17) on the other hand, is of equal size.

7. Machine according to one of Claims 1-6, **characterized in that** the free end surface (244) of the yoke limbs (241, 242) of the stator yokes (24) has at least the same axial width as the rotor rings (16, 17), preferably projecting beyond the latter on one side or both sides.

8. Machine according to one of Claims 1-7, **characterized in that** the width of the stator yokes (24) and the width of the magnetic return path elements (25; 25') are of approximately equal size, in each case measured in the rotation direction.

9. Machine according to one of Claims 1-8, **characterized in that** the ratio of the tooth width (b_{ZR}) of the teeth (22) on the rotor rings (16, 17) to the width (b_{ZS}) of the stator yokes (24), and magnetic return path elements (25), in each case seen in the rotation direction, is chosen to be greater than 1 and less than 2, preferably to be less than or equal to 1.5.

10. Machine according to one of Claims 1-9, **characterized in that** the magnetic return path elements (25) are C-shaped with two short limbs (251, 252), which are in each case radially opposite a rotor ring (16, 17), and with a transverse web (253) which connects them to one another and extends parallel to the rotor axis (19) on the inside, facing the rotor axis (19), of the circular annular coil (23).

11. Machine according to one of Claims 1-9, **characterized in that** the magnetic return path elements (25') are U-shaped with two long limbs (251', 252') which are each radially opposite a rotor ring (16, 17), and with a transverse web (253') which connects them to one another and extends parallel to the rotor axis (19), and **in that** the annular coil (23') of the stator module (14) is formed in a meandering shape in the radial plane, with point symmetry with respect to the rotor axis (19), such that it successively and alternately passes through between the yoke limbs (241, 242) of one stator yoke (24) and beyond the outside, facing away from the rotor axis (19), of one transverse web (253') of a magnetic return path element (25').

12. Machine according to Claim 11, **characterized in that** the stator yokes (24) and the magnetic return path elements (25') are identical.

13. Machine according to one of Claims 10-12, **characterized in that** the free end surface (254 or 254', respectively) of the limbs (251, 252 or 251', 252', respectively) of the magnetic return path elements (25 or 25', respectively) has at least the same axial width as the rotor rings (16, 17), preferably projecting beyond them on one side or both sides.

14. Machine according to one of Claims 1-13, **characterized in that** current pulses flow through the stator modules (14) in a bipolar manner as a function of the rotation angle (θ) of the rotor (12), and **in that** the current pulses in the stator modules (14) are phase-shifted through 90° with respect to one another if there are two stator modules (14), and are phase-shifted through 360°/m with respect to one another if there are m stator modules (14), where m is an integer and is greater than 2.

15. Machine according to one of Claims 1-14, **characterized in that** each stator module (14) is held in a housing (30) which comprises two half shells (31, 32) which are identical and are placed onto one another with mirror-image symmetry, and have radial slots (36, 37), which are aligned axially with one another, for the insertion firstly of the stator yokes (24) and secondly of the magnetic return path elements (25), as well as depressions (39) which are opposite one another with mirror-image symmetry and are aligned concentrically with respect to the housing axis (38), for holding the annular coil (23).

16. Machine according to Claim 15, **characterized in that** each half shell (31, 32) has a grid-like structure with an inner ring (33) and an outer ring (34) concentric with respect to it, which are integrally connected to one another by means of radial webs (35), and **in that** the radial slots (37) which hold the magnetic return path elements (25) are incorporated in the inner ring (33), and the radial slots (36) which hold the stator yokes (24) extend over the inner ring (33), the radial web (35) and the outer ring (34).

17. Machine according to Claim 16, **characterized in that** the depressions (39) for the annular coil (23) are incorporated in the radial webs (35).

18. Machine according to one of Claims 15-17, **characterized in that** the stator yokes (24) and the radial slots (36) which hold them are matched to one another such that, in the case of the stator yokes (24) and magnetic return path elements (25) which are inserted into the radial slots (36, 37), the two half shells (31, 32) are fixed radially and axially on one another such that they cannot move.

19. Machine according to Claim 18, **characterized in that** the width of the radial slots (36, 37) is matched to the thickness of the stator yokes (24) and magnetic return path elements (25), and the axial depth of the radial slots (36, 37) is designed to be slightly larger than half the axial width of the stator yokes (24) and magnetic return path elements (25).

20. Machine according to Claim 18 or 19, **characterized in that** the stator yokes (24) each have a projecting hook (41) on both sides of their transverse web (243), which hook (41), when the stator yokes (24) are inserted into the radial slots (36), engages over a radial web (35) of the two half shells (31, 32) in an interlocking manner, on its rear face facing away from the radial slot (36).

21. Machine according to Claim 20 having a multiple winding section configuration, in which the rotor modules (15) are arranged on the rotor shaft (13) such that they are axially aligned, and the stator modules (14) are twisted through a fixed angle with respect to one another, **characterized in that** two radial cutouts (42, 43), which are at a distance from one another, are incorporated, from those outer sides of the half shell (31) which face away from the radial slots (36), in those annular sections (341) of the outer ring (34) of the half shells (31, 32) which extend between the radial webs (35), the width of which radial cutouts (42, 43) in the circumferential direction corresponds to the width of the hooks (41) which project on the stator yokes (24), while their radial depth corresponds to the axial size of the hooks (41), and **in that** one radial recess (43) is arranged offset through the fixed rotation angle with respect to the subsequent radial slot (36) for a stator yoke (24), and the other radial recess (44) is arranged offset through the same fixed rotation angle with respect to the preceding radial slot (36) for a stator yoke (24).

22. Machine according to Claim 18 or 19 having a multiple winding section configuration, in which the stator modules (14) are axially aligned and the rotor modules (15) are arranged on the rotor shaft (13) twisted through a fixed angle with respect to one another, **characterized in that** the stator yokes (24) of the stator modules (14) which are located alongside one another in the axial direction are connected to one another in their transverse web region by means of axially extending links (48), **in that** the two external stator yokes (24) of those which are connected to one another each have a hook (41), which projects from the transverse web (243), on their outer face, which hook (41), when the stator yokes (24) are inserted into the radial slots (36), engages over a radial web (35) of the two outer half shells (31, 32), on its rear face facing away from the radial slot (36).

23. Machine according to Claim 22, **characterized in that** the stator yokes (24) which are connected to one another via links (48) are in the form of integral stamped parts (49).

24. Machine according to one of Claims 20-23, **characterized in that** a radial recess (42) is incorporated in the slot base at that end of each radial slot which is located in the outer ring (34), and its radial depth is designed such that, when the stator yoke (24) is inserted in the correct position into the radial slot (36), the lower edge, pointing towards the inner ring (33), of the hook root (411) of the hook (41) which projects on the transverse web (23) makes contact with the base of the recess (42).

25. Machine according to one of Claims 15-24, **characterized in that**, in order to provide the rotating bearing for the rotor shaft (13), two bearing plates (45) are fitted to the two outer half shells (31, 32), are attached by a flanged part (46) on the half shells (31, 32), and hold the rotor shaft (13) in a coaxial bearing stud (47) projecting from them.

26. Machine according to one of Claims 1-25, **characterized in that** the at least one rotor module (15) is arranged in a rotationally fixed manner on a hollow shaft (50).

## Revendications

1. Machine à flux transversal unipolaire comprenant
- un rotor (12) pouvant tourner autour d'un axe de rotor (19) et présentant au moins un module de rotor (15) composé respectivement de deux bagues de rotor (16, 17) ferromagnétiques coaxiales dont la denture est à pas constant, et une bague d'aimant permanent (18) à magnétisme unipolaire dans le sens de l'axe de rotor (19) compressée entre les bagues de rotor, et
- un stator (11) concentrique par rapport à l'axe de rotor (18) présentant au moins un module de stator (14) associé au module de rotor (15), et composé d'une bobine toroïdale (23 ; 23') coaxiale à l'axe de rotor (19) et de culasses de stator (24) en forme de U dépassant de celles-ci et fixées sur un boîtier (10) selon un pas correspondant au pas de la denture, la denture des bagues de rotor (16, 17) étant située exclusivement sur la circonférence extérieure des bagues de rotor (16, 17) détournée de l'axe de rotor (19) et, dans le module de stator (14), les culasses de stator (24) étant disposées pour que l'une des branches (241) de culasses de stator (24) soit en face de l'une des bagues de rotor (16) alors que l'autre branche (242) de culasses de stator (24) est en face de l'autre bague de rotor (17) en laissant à chaque fois un écartement radial,
**caractérisée en ce qu'**
un élément de blindage (25 ; 25') est à chaque fois placé entre des culasses de stator (24) disposées successivement dans le sens de rotation du rotor (12) et s'étend axialement sur les deux bagues de rotor (16, 17) en regard de celles-ci en laissant un écartement radial.

2. Machine selon la revendication 1,
**caractérisée en ce que**
le rotor (12) présente deux modules de rotor (15) identiques et le stator (11) deux modules de stator (14) identiques, les modules de stator (14) étant fixés axialement l'un à côté de l'autre dans un boîtier (10) et les modules de rotor (15) étant fixés axialement l'un à côté de l'autre sur un arbre de rotor (13), dans une disposition à chaque fois réciproque de sorte que les modules de stator (14) ou les modules de rotor (15) tournent électriquement à 90° à chaque fois l'un par rapport à l'autre.

3. Machine selon la revendication 1,
**caractérisée en ce que**
le rotor (12) présente m modules de rotor (15) et le stator (11) m modules de stator (14), les modules de stator (14) étant fixés axialement l'un à côté de l'autre dans un boîtier (10) et les modules de rotor (15) étant fixés axialement l'un à côté de l'autre sur un arbre de rotor (13), dans une disposition à chaque fois réciproque de sorte que les modules de stator (14) ou les modules de rotor (15) tournent électriquement à chaque fois à 360°/m, m étant un nombre entier supérieur à 2.

4. Machine selon l'une des revendications 1 à 3,
**caractérisée en ce que**
les culasses de stator (24) et les éléments de blindage (25 ; 25') ainsi que les bagues de rotor (16, 17) sont lamellé(e)s.

5. Machine selon l'une des revendications 1 à 4,
**caractérisée en ce que**
les éléments de blindage (25 ; 25') sont disposés autour d'un pas polaire de manière décalée par rapport aux culasses de stator (24).

6. Machine selon l'une des revendications 1 à 5,
**caractérisée en ce que**
la distance de l'écartement radial entre les culasses de stator (24) et les bagues de rotor (16, 17) d'une part et entre les éléments de blindage (25 ; 25') et les bagues de rotor (16, 17) d'autre part, est identique.

7. Machine selon l'une des revendications 1 à 6,
**caractérisée en ce que**
les surfaces frontales libres (244) des branches (241, 242) de culasses de stator (24) ont au moins la même largeur axiale que les bagues de rotor (16, 17), et de préférence dépassent de celles-ci d'un côté ou des deux côtés.

8. Machine selon l'une des revendications 1 à 7,
**caractérisée en ce que**
la largeur des culasses de stator (24) et la largeur des éléments de blindage (25 ; 25') mesurée à chaque fois dans le sens de rotation, est approximativement identique.

9. Machine selon l'une des revendications 1 à 8,
**caractérisée en ce que**
le rapport de la largeur (b_{ZR}) des dents (22) sur les bagues de rotor (16, 17) par rapport à la largeur (b_{ZS}) des culasses de stator (24) et des éléments de blindage (25),considéré à chaque fois dans le sens de rotation, est supérieur à 1 et inférieur à 2, de préférence inférieur ou égal à 1,5.

10. Machine selon l'une des revendications 1 à 9,
**caractérisée en ce que**
les éléments de blindage (25) en forme de C présentent deux branches courtes (251, 252) à chaque fois situées radialement à l'opposé d'une bague de rotor (16, 17) ainsi qu'une entretoise transversale (253) reliant celles-ci entre elles et s'étendant parallèlement à l'axe de rotor (19) sur la face intérieure de la bobine toroïdale (23) circulaire qui est tournée vers l'axe de rotor (19).

11. Machine selon l'une des revendications 1 à 9,
**caractérisée en ce que**
les éléments de blindage (25') en forme de U présentent deux branches longues (251', 252') situées à chaque fois radialement à l'opposé d'une bague de rotor (16, 17) ainsi qu'une entretoise transversale (253') s'étendant parallèlement à l'axe de rotor (19) et reliant celles-ci entre elles, et la bobine toroïdale (23') du module de stator (14) possède une forme sinueuse ponctuellement symétrique par rapport à l'axe de rotor (19) dans le plan radial de telle sorte qu'elle s'étend successivement et alternativement entre les branches (241, 242) d'une culasse de stator (24) et sur la face extérieure détournée de l'axe de rotor (19) d'une entretoise transversale (253') d'un élément de blindage (25').

12. Machine selon la revendication 11,
**caractérisée en ce que**
les culasses de stator (24) et les éléments de blindage (25') ont une configuration identique.

13. Machine selon l'une des revendications 10 à 12,
**caractérisée en ce que**
les surfaces frontales libres (254 ou 254') des branches (251, 252 ou 251', 252') des éléments de blindage (25 ou 25') ont au moins la même largeur axiale que les bagues de rotor (16, 17), et de préférence dépassent de celles-ci d'un côté ou des deux côtés.

14. Machine selon l'une des revendications 1 à 13,
**caractérisée en ce que**
les modules de stator (14) sont alimentés par des impulsions électriques de manière bipolaire en fonction de l'angle de rotation (θ) du rotor (12) et les impulsions électriques ont un décalage de phase les unes par rapport aux autres dans les modules de stator (14) de 90° en présence de deux modules de stator (14) et de 360°/m en présence de m modules de stator (14), m étant un nombre entier supérieur à 2.

15. Machine selon l'une des revendications 1 à 14,
**caractérisée en ce que**
chaque module de stator (14) est logé dans un boîtier (30) composé de deux demi-coquilles (31, 32) identiques et placées symétriquement l'une sur l'autre en vis à vis
et qui présentent
- des rainures radiales (36, 37) alignées axialement entre elles permettant d'insérer d'une part les culasses de stator (24) et d'autre part les éléments de blindage (25), ainsi que
- des cavités (39) symétriques entre elles en vis à vis et situées concentriquement de manière opposée par rapport à l'axe de boîtier (38) pour recevoir la bobine toroïdale (23).

16. Machine selon la revendication 15,
**caractérisée en ce que**
chaque demi-coquille (31, 32) présente une structure en forme de grille avec une bague interne (33) et une bague externe (34) concentrique par rapport à celle-ci, qui sont reliées d'une seule pièce entre elles par des entretoises radiales (35), et les rainures radiales (37) recevant les éléments de blindage (25) sont pratiquées dans la bague interne (33) alors que les rainures radiales (36) recevant les culasses de stator (24) s'étendent sur la bague interne (33), l'entretoise radiale (35) et la bague externe (34).

17. Machine selon la revendication 16,
**caractérisée en ce que**
les cavités (39) pour la bobine toroïdale (23) sont pratiquées dans les entretoises radiales (35).

18. Machine selon l'une des revendications 15 à 17,
**caractérisée en ce que**
les culasses de stator (24) et les rainures radiales (36) qui les reçoivent sont ajustées les unes sur les autres de sorte que, lorsque les culasses de stator (24) et les éléments de blindage (25) sont insérés dans les rainures radiales (36, 37), les deux demi-coquilles (31, 32) sont fixées entre elles de manière à ne pas être décalées radialement et axialement l'une par rapport à l'autre.

19. Machine selon la revendication 18,
**caractérisée en ce que**
la largeur des rainures radiales (36, 37) est ajustée à l'épaisseur des culasses de stator (24) et des éléments de blindage (25), et la profondeur axiale des rainures radiales (36, 37) est légèrement supérieure à la demi-largeur axiale des culasses de stator (24) et des éléments de blindage (25).

20. Machine selon la revendication 18 ou 19,
**caractérisée en ce que**
les culasses de stator (24) présentent à chaque fois un crochet (41) qui dépasse des deux côtés de leur entretoise transversale (243), et qui lorsque les culasses de stator (24) sont insérées dans les rainures radiales (36), chevauche par complémentarité de forme une entretoise radiale (35) des deux demi-coquilles (31, 32) sur leur face arrière détournée de la rainure radiale (36).

21. Machine selon la revendication 20 réalisée avec plusieurs brins, dans laquelle les modules de rotor (15) sont alignés axialement sur l'arbre de rotor (13) et les modules de stator (14) tournent les uns à côté des autres d'un angle fixe,
**caractérisée en ce que**
dans les parties annulaires (341) appartenant à la bague externe (34) des demi-coquilles (31, 32) et qui s'étendent entre les entretoises radiales (35) à partir des côtés extérieurs de la demi-coquille (31) détournés des rainures radiales (36), deux découpes radiales (44, 43) sont pratiquées à distance l'une de l'autre, leur largeur correspondant dans le sens circonférentiel à la largeur des crochets (41) dépassant des culasses de stator (24) et leur profondeur radiale correspondant à la mesure axiale des crochets (41), l'une des découpes radiales (43) étant décalée de l'angle de rotation fixe par rapport à la rainure radiale (36) suivante pour une culasse de stator (24), alors que l'autre découpe radiale (44) est décalée du même angle de rotation fixe par rapport à la rainure radiale (36) précédente pour une culasse de stator (24).

22. Machine selon la revendication 18 ou 19 réalisée avec plusieurs brins, dans laquelle les modules de stator (14) sont alignés axialement et les modules de rotor (15) sont disposés sur l'arbre de rotor (13) et tournent l'un par rapport à l'autre d'un angle fixe,
**caractérisée en ce que**
les culasses de stator (24) des modules de stator (14) situés les uns à côté des autres dans le sens de l'axe sont reliées ensemble au niveau de leur entretoise transversale par des ponts (48) s'étendant axialement, les deux culasses de stator (24) reliées entre elles et situées à l'extérieur présentant à chaque fois un crochet (41) qui dépasse de l'entretoise transversale (243) sur leur face extérieure et qui chevauche une entretoise radiale (35) des deux demi-coquilles (31, 32) extérieures sur leur face arrière détournée de la rainure radiale (36), lorsque les culasses de stator (24) sont insérées dans les rainures radiales (36).

23. Machine selon la revendication 22,
**caractérisée en ce que**
les culasses de stator (24) reliées entre elles par des ponts (48) sont formées d'une seule pièce comme pièces estampées (49).

24. Machine selon l'une des revendications 20 à 23,
**caractérisée en ce que**
sur l'extrémité de chaque rainure radiale située sur la bague externe (34), un évidement radial (42) est pratiqué au fond de la rainure, sa profondeur radiale étant choisie pour que la racine (411) du crochet (41) dépassant de l'entretoise transversale (23) vienne en butée au fond de l'évidement (42), son arête inférieure étant tournée vers la bague interne (23) lorsque la culasse de stator (24) est fixée en position sur le palier dans la rainure radiale (36).

25. Machine selon l'une des revendications 15 à 24,
**caractérisée en ce que**
pour la rotation de l'arbre de rotor (13), deux flasques de roulement (45) placés sur les deux demi-coquilles (31, 32) situées à l'extérieur, sont fixés par un élément de bride (46) sur les deux demi-coquilles (31, 32) et reçoivent l'arbre de rotor (13) dans un support de palier (47) coaxial qui dépasse de celles-ci.

26. Machine selon l'une des revendications 1 à 25,
**caractérisée en ce qu'**
au moins un module de rotor (15) est fixé en rotation sur un arbre creux (50).
